# EUROPÄISCHE PATENTSCHRIFT

(11) **EP 0 463 421 B1**
(45) Veröffentlichungstag und Bekanntmachung des Hinweises auf die Patenterteilung: **18.10.1995**
(21) Anmeldenummer: 91109218.7
(22) Anmeldetag: 06.06.1991
(51) Int. Cl.: B29C 33/62, B29C 33/64

(54) **Wässriges Trennmittel zur Herstellung von Polyurethan-Formkörpern enthaltend ethoxylierten Alkohol**
Waterborne release agent, containing ethoxylic alcohol, for manufacturing of moulded polyurethane
Agent de démoulage sur la base aqueuse, contenant de l'alcool éthoxilique, pour la fabrication de polyuréthane moulé

(30) Priorität: 23.06.1990 DE 4020036
(43) Veröffentlichungstag der Anmeldung: 02.01.1992
(73) Patentinhaber: KLÜBER CHEMIE KG, D-82212 Maisach (DE)
(72) Erfinder: Herres, Werner, Dr., W-8031 Eichenau (DE); Galle, Thomas, W-8031 Maisach-Gernlinden (DE); Rupp, Siglinde, W-8031 Maisach-Gernlinden (DE)
(74) Vertreter: Steffens, Joachim, Dr.

(56) Entgegenhaltungen:
- EP-A- 0 320 833
- EP-A- 0 328 498
- EP-A- 0 444 438
- DE-A- 3 842 471
- DR. K. STOECKHERT 'KUNTSTOFF-LEXICON' 1981 , CARL HANSER VERLAG , MÜNCHEN . DE

## Beschreibung

Es ist bekannt, daß Polyurethane gegenüber anderen Werkstoffen eine starke Adhäsion zeigen, was zu einer breiten Anwendung von Polyurethansystemen auf dem Klebstoffsektor geführt hat. Diese klebende Wirkung macht sich jedoch bei der Herstellung von Polyurethan-Formkörpern, egal ob geschäumt oder ungeschäumt, sehr nachteilig bemerkbar. Es ist daher notwendig, bei der Herstellung solcher Formkörper Trennmittel einzusetzen, die auf die Wandungen der Form, mit denen die Polyurethansysteme in Berührung kommen, aufgebracht werden. Meist werden Trennmittel auf Wachs-, Seifen und/oder Ölbasis mit Druckluft in die geöffnete Form eingesprüht, wobei es weniger auf die Menge des Trennmittels als auf einen gleichmäßigen Auftrag ankommt. Dies muß nach jeder Entformung wiederholt werden.

Im Gegensatz zu früher, als man ausschließlich mit lösungsmittelhaltigen Trennmitteln gearbeitet hat, versucht man heute anstelle der lösungsmittelhaltigen Trennmittel - zwecks Umweltschonung - Trennmittel auf wässriger Basis einzusetzen, beispielsweise solche, die als Trennmittelkomponente höhermolekulare Kohlenwasserstoffe enthalten. Beispiele hierfür sind wässrige Dispersionen von Polyethylenwachsen, wässrige Emulsionen von Paraffinen oder wässrige Emulsionen von Polyölen, d.h. ungesättigte oligigomere oder polymere Kohlenwasserstoffe, wobei die Wachse, Paraffine und/oder Polyöle vom Fachmann je nach gewünschtem Einsatzzweck ausgewählt werden.

In der DE-A-3 842 471 ist eine wässrige Emulsion beschrieben, die neben der Behandlung von Textilien oder als Mittel zur Körperpflege, beispielsweise für Formulierungen von Schutzlotionen und Kosmetikas, auch als generelles Formtrennmittel eingesetzt werden kann. Für die spezielle Anwendung als Polyurethan-Trennmittel findet man nirgends einen Hinweis.

Darüber hinaus handelt es sich bei den in dieser Entgegenhaltung erwähnten ethoxylierten Alkoholen um oberflächenaktive Mittel, d.h., derartige ethoxylierte Alkohole basieren üblicherweise auf Fettalkoholen. Derartige ethoxylierte Fettalkohole fallen aber nicht unter die erfindungsgemäß eingesetzte Gruppe von ethoxylierten Alkoholen, da diese gemäß der Erfindung als Alkoholkomponente eine solche aufweisen müssen, die mindestens 22 Kohlenstoffatome hat. Fettalkohole weisen demgegenüber laut Definition (siehe Chemie-Lexikon von Römpp, 6. Auflage, Band II, Seite 2031, linke Spalte) nur 8 bis 18 Kohlenstoffatome auf. Die höhermolekularen Alkohole, wie z.B. Carnaubylalkohol (C₂₄H₄₉OH), Cerylalkohol(C₂₆H₅₃OH) oder Myricylalkohol (C₃₀H₆₁OH) heißen dagegen Wachsalkohole, weil sie Spaltstücke von natürlichen Wachsen sind.

Grundsätzlich hat sich jedoch bei den wässrigen Trennmitteln erwiesen, daß die zur Herstellung der Dispersionen benötigten Hilfsstoffe - wie z. B. Emulgatoren, Lösungsvermittler etc. - sich nicht nur nachteilig auf den gewünschten Trenneffekt auswirken, sondern insbesondere auch die Oberflächenbeschaffenheit des Formkörpers negativ beeinflussen.

Aufgabe der vorliegenden Erfindung ist es daher, ein wässriges Trennmittel zur Herstellung von Polyurethan-Formkörpern zur Verfügung zu stellen, das eine deutliche Reduktion der üblichen Emulgatoren erlaubt, dabei eine verbesserte Trennleistung aufweist und mit dem insbesondere die Qualität der Eigenschaften der Formkörper-Oberflächen in starkem Maße erhöht werden.

Gelöst wird diese Aufgabe gemäß der vorliegenden Erfindung durch die Verwendung eines wässrigen Trennmittels bei der Herstellung von Polyurethan-Formkörpern, insbesondere bei der Herstellung von Polyurethanschaumstoff-Formkörpern, bestehend im wesentlichen aus Wasser, trennwirksamen Substanzen und Emulgatoren, daß dadurch gekennzeichnet ist, daß das wässrige Trennmittel die trennwirksamen Substanzen in Kombination mit einem oder mehreren ethoxylierten Alkoholen der allgemeinen Formel 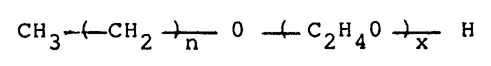
enthält, in der bedeuten
- n: eine ganze Zahl von 22 bis 60, vorzugsweise von 28 bis 52,
und
- x: eine ganze Zahl von 2 bis 50, vorzugsweise von 3 bis 40,
Das erfindungsgemäß verwendete wässrige Trennmittel enthält den ethoxylierten Alkohol oder deren Gemische in einer Menge von 0,5 bis 40 Gew.-%, vorzugsweise in einer Menge von 1 bis 20 Gew.-%, bezogen auf das Gesamtgewicht des Trennmittels.

Die erfindungsgemäß eingesetzten ethoxylierten Alkohole bewirken mit anderen trennwirksamen Substanzen einen synergistischen Effekt derart, daß die Trennwirkung als solche und die Qualität der Formteiloberflächen in starkem Maße erhöht wird. Dieser positive Effekt tritt gleichermaßen bei der Anwendung auf Weich-, Halbhart- und Hartschäume und bei gefüllten und/oder faserverstärkten PU-Formteilen mit oder ohne integraler Oberfläche auf.

Gemäß der vorliegenden Erfindung besteht die trennwirksame Substanz vorzugsweise zumindest zum Teil aus einem oder mehreren ungesättigten oligomeren oder polymeren Kohlenwasserstoffen, gegebenenfalls in Kombination mit für Polyurethan-Systeme geeignete Schaumstabilisatoren, wobei die ungesättigten oligomeren oder polymeren Kohlenwasserstoffe ein Molekulargewicht von mindestens 500, vorzugsweise von 1.000 bis 10.000, insbesondere von 2.500 bis 6.000, und Jodzahlen von mindestens 60, vorzugsweise von 150 bis 600, aufweisen.

Die in der erfindungsgemäßen Kombination vorzugsweise eingesetzten ungesättigten Kohlenwasserstoffe können Homo- oder Copolymerisate bzw. Blockcopolymerisate sein und sind vorzugsweise bei Raumtemperatur und unter den Verarbeitungsbedingungen flüssig oder fließfähig. Sie enthalten vorzugsweise die Doppelbindungen nicht in konjugierter Form, so daß zu den erfindungsgemäß besonders bevorzugten ungesättigten Kohlenwasserstoffen solche gehören, die Oligomere oder Polymere von Isopren und/oder Butadien sind und die gegebenenfalls noch mit anderen damit polymerisierbaren Monomeren copolymerisiert oder blockcopolymerisiert sein können. Sie können außerdem zusätzlich noch funktionelle Gruppen, insbesondere Sauerstoff und/oder Stickstoff enthaltende Gruppen sowie solche Gruppen aufweisen, die nach Zerewitinoff aktive Wasserstoffatome enthalten.

Ein erfindungsgemäß besonders bevorzugt eingesetzter ungesättigter Kohlenwasserstoff ist ein flüssiges Polybutadien, in den Beispielen mit "UKW-Liquid" bezeichnet, das ein Molekulargewicht von ca. 3.000 und eine Jodzahl von ca. 450 aufweist.

Das erfindungsgemäß verwendete wässrige Trennmittel enthält die ungesättigten Kohlenwasserstoffe vorzugsweise in einer Menge von 0,5 bis 50 Gew.-%, insbesondere in einer Menge von 1 bis 30 Gew.-%, bezogen auf das Gesamtgewicht des Trennmittels. Die für das jeweilige Polyurethan-System am besten geeigneten Mengen an ungesättigten Kohlenwasserstoffen werden in der üblichen Weise, die dem Fachmann geläufig ist, experimentell ermittelt.

Das erfindungsgemäß verwendete wässrige Trennmittel kann aber auch als trennwirksame Substanz zumindest zum Teil ein für diese Zwecke übliches Siliconöl, vorzugsweise ein gegebenenfalls mit aliphatischen und/oder aromatischen Kohlenwasserstoffresten substituiertes Polydimethylsilicon und/oder zumindest zum Teil für diese Zwecke übliche Fette und/oder Öle und/oder zumindest zum Teil ein für diese Zwecke übliches flüssiges oder festes natürliches oder synthetisches Wachs enthalten. Ferner können als trennwirksame Substanzen zumindest zum Teil Ester aus natürlichen und/oder synthetischen Carbonsäuren mit ein- oder mehrwertigen Alkoholen eingesetzt werden.

Zusätzlich können die üblichen Emulgatoren in den üblichen Mengen eingesetzt werden.

Als Schaumstabilisatoren werden die für die jeweiligen Polyurethanschaumstoff-Systeme üblichen Schaumstabilisatoren eingesetzt. Zu den Erfindungsgemäß bevorzugt eingesetzten Schaumstabilisatoren gehören Polysiloxan-Polyether-Copolymerisate unterschiedlichen Aufbaus, wie sie beispielsweise im Kunststoff-Handbuch "Polyurethane" Becker/Braun, Hanser-Verlag/München und in den US-PSen 28 34 748, 29 17 480, 36 29 308 sowie in den DE-Os 25 58 523 beschrieben sind.

Die Schaumstabilisatoren werden vorzugsweise in einer Menge von 0,2 bis 6 Gew.-%, insbesondere von 0,5 bis 3 Gew.-%, bezogen auf das Gesamtgewicht des Trennmittels, eingesetzt.

Im übrigen können die erfindungsgemäß verwendeten wässrigen Trennmittel in Trennmitteln gebräuchliche Zusätze enthalten, wie z. B. Biozide, Aminverbindungen, quaternäre Ammoniumverbindungen, oberflächenmodifizierende Substanzen (Bentonite) u.a.

Die nachfolgenden Beispiele erläutern die Erfindung.

### Beispiel 1

Ein wässriges Trennmittel, das bei der Herstellung von Polyurethan-Weichschaumformkörpern Anwendung findet, hat folgende Zusammensetzung:
16 Gew.-% UKW-Liquid (siehe Beschreibung Seite 6,
4 Gew.-% ethoxylierter Alkohol mit n = 29 und x = 10
1 Gew.-% Schaumstabilisator DC 190 (Handelsprodukt der Firma Dow Corning)
79 Gew.-% Wasser

### Beispiel 2

Ein weiteres wässriges Trennmittel, das bei der Herstellung von glasfaserverstärkten Polyurethan-Hartschaumformkörpern mit integraler Oberfläche Anwendung findet, hat folgende Zusammensetzung:
10 Gew.-% Mikrowachs (F: 70° C)
2 Gew.-% ethoxylierter Alkohol mit n = 49 und x = 4
4 Gew.-% ehtoxylierter Alkohol mit n = 29 und x = 10
3 Gew.-% Emulgator: Mulsifan RT 231 = Kombination von Alkylaryl- und Alkylpolyglykolethern (Handelsprodukt der Fa. Zschöimmer & Schwarz)
2 Gew.-% modifiziertes Siliconöl vertrieben von Wacker unter der Bezeichnung "Wacker TN"
79 Gew.-% Wasser

## Patentansprüche

1. Verwendung eines wässsrigen Trennmittels bei der Herstellung von Polyurethan-Formkörpern, insbesondere bei der Herstellung von Polyurethanschaumstoff-Formkörpern, bebestehend im wesentlichen aus Wasser, trennwirksamen Substanzen und Emulgatoren, dadurch gekennzeichnet, daß das wässrige Trennmittel die trennwirksamen Substanzen in Kombination mit einem oder mehreren ethoxylierten Alkoholen der allgemeinen Formel 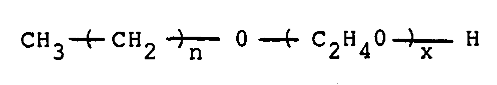 enthält, in der bedeuten
n eine ganze Zahl von 22 bis 60, vorzugsweise von 28 bis 52,
und
x eine ganze Zahl von 2 bis 50, vorzugsweise von 3 bis 40,

2. Verwendung eines wässrigen Trennmittels nach Anspruch 1, dadurch gekennzeichnet, daß es den ethoxylierten Alkohol oder Gemische davon in einer Menge von 0,5 bis 40 Gew.-%, vorzugsweise in einer Menge von 1 bis 20 Gew.-%, bezogen auf das Gesamtgewicht des Trennmittels enthält.

3. Verwendeung eines wässrigen Trennmittels nach Anspruch 1 und 2, dadurch gekennzeichnet, daß es als trennwirksame Substanzen zumindest zum Teil einen oder mehrere ungesättigte oligomere oder polymere Kohlenwasserstoffe mit Molekulargewichten von mindestens 500, vorzugsweise von 1000 bis 10 000, und Jodzahlen von mindestens 60, vorzugsweise von 150 bis 600, enthält.

4. Verwendung eines wässrigen Trennmittels nach Anspruch 1 bis 3, dadurch gekennzeichnet, daß die ungesättigten Kohlenwasserstoffe Oligomere oder Polymere von Isopren und/oder Butadien sind, die gegebenenfalls noch mit anderen damit polymerisierbaren Monomeren copolymerisiert oder blockcopolymerisiert sein können.

5. Verwendung eines wässrigen Trennmittels nach Anspruch 1 bis 4, dadurch gekennzeichnet, daß es die ungesättigten Kohlenwasserstoffe in einer Menge von 0,5 bis 50 Gew.-%, insbesondere in einer Menge von 1 bis 30 Gew.-%, bezogen auf das Gesamtgewicht des Trennmittels, enthält.

6. Verwendung eines wässrigen Trennmittels nach Anspruch 1 bis 5, dadurch gekennzeichnet, daß es in Kombination mit den trennwirksamen Substanzen für Polyurethan-Systeme geeignete Schaumstabilisatoren enthält, vorzugsweise in einer Menge von 0,2 bis 6 Gew.-%, vorzugsweise von 0,5 bis 3 Gew.-%, bezogen auf das Gesamtgewicht des Trennmittels, enthält.

7. Verwendung eines wässrigen Trennmittels nach Anspruch 1 bis 6, dadurch gekennzeichnet, daß es als trennwirksame Substanz zumindest zum Teil ein für diese Zwecke übliches Siliconöl, vorzugsweise ein gegebenenfalls mit aliphatischen und/oder aromatischen Kohlenwasserstoffresten substituiertes Polydimethylsilicon enthält.

8. Verwendung eines wässrigen Trennmittels nach Anspruch 1 bis 7, dadurch gekennzeichnet, daß es als trennwirksame Substanz zumindest zum Teil für diese Zwecke übliche Fette und/oder Öle enthält.

9. Verwendung eines wässrigen Trennmittels nach Anspruch 1 bis 8, dadurch gekennzeichnet, daß es als trennwirksame Substanz zumindest zum Teil ein für diese Zwecke übliches flüssiges oder festes natürliches oder synthetisches Wachs enthält.

10. Verwendung eines wässrigen Trennmittels nach Anspruch 1 bis 9, dadurch gekennzeichnet, daß es als trennwirksame Substanz zumindest zum Teil Ester aus natürlichen und/oder synthetischen Carbonsäuren mit ein- oder mehrwertigen Alkoholen enthält.

## Claims

1. Use of an aqueous release agent in a process of manufacture of polyurethane moldings, especially by the manufacture of polyurethane foam moldings, comprising essentially water, release substances and emulsifiers, characterized in that the aqueous release agent contains the release substances in combination with one or more ethoxylated alcohols of the general formula 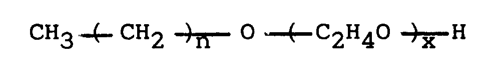 wherein:
n is a whole number of 22 to 60, preferably of 28 to 52, and
x is a whole number of 2 to 50, preferably of 3 to 40.

2. Use of an aqueous release agent according to claim 1, characterized in that it comprises the ethoxylated alcohol or mixtures thereof in a quantity of 0.5 to 40%, preferably of 1 to 20%, of the overall weight of the release agent.

3. Use of an aqueous release agent according to claim 1 and 2, characterized in that as the release substances it contains at least partly one or more unsaturated oligomeric or polymeric hydrocarbons, having a molecular weight of at least 500, preferably of 1,000 to 10,000, and iodine numbers of at least 60, preferably of 150 to 600.

4. Use of an aqueous release agent according to claims 1 to 3, characterized in that the unsaturated hydrocarbons are oligomers or polymers of isoprene and/or butadiene, which may optionally be copolymerized or block copolymerized with other monomers, which are able to be polymerized therewith.

5. Use of an aqueous release agent according to claims 1 to 4, characterized in that it contains the unsaturated hydrocarbons in a quantity of 0.5 to 50%, more particularly in a quantity of 1 to 30%, of the overall weight of the release agent.

6. Use of an aqueous release agent according to claims 1 to 5, characterized in that in combination with the release substances it contains foam stabilizers which are suitable for polyurethane systems, preferably in a quantity of 0.2 to 6%, preferably of 0.5 to 3%, of the overall weight of the release agent.

7. Use of an aqueous release agent according to claims 1 to 6, characterized in that as the release substance it contains at least in part a silicone oil which is conventional for this purpose, preferably a polydimethylsilicone which is optionally substituted with aliphatic and/or aromatic hydrocarbon radicals.

8. Use of an aqueous release agent according to claims 1 to 7, characterized in that as a release substance it contains at least in part fats and/or oils which are conventional for this purpose.

9. Use of an aqueous release agent according to claims 1 to 8, characterized in that as a release substance it contains at least in part a liquid or solid natural or synthetic wax which is conventional for this purpose.

10. Use of an aqueous release agent according to claims 1 to 9, characterized in that as a release substance it contains at least in part esters of natural and/or synthetic carboxylic acids with monovalent or polyvalent alcohols.

## Revendications

1. Utilisation d'un agent de séparation aqueux pour la production de corps moulés en polyuréthanne, en particulier pour la production de corps moulés en mousse de polyuréthanne composé essentiellement d'eau, de substances actives de séparation, et d'agents émulsionnants, caractérisée en ce que l'agent de séparation aqueux renferme des substances actives de séparation en combinaison avec un ou plusieurs alcools ethoxylés de formule générale : 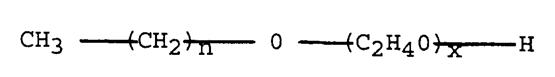 dans laquelle :
n signifie un nombre entier allant de 22 à 60, de préférence de 28 à 52, et
x signifie un nombre entier allant de 2 à 50, de préférence de 3 à 40.

2. Utilisation d'un agent de séparation selon la revendication 1, caractérisée en ce que l'agent de séparation renferme l'alcool ethoxylé ou le mélange de ceux-ci en quantité allant de 0,5 à 40 % en poids, de préférence en quantité allant de 1 à 20 % en poids rapporté au poids total de l'agent de séparation.

3. Utilisation d'un agent de séparation aqueux selon la revendication 1 et la revendication 2, caractérisée en ce que l'agent de séparation aqueux renferme, en tant que substances actives de séparation, au moins en partie un ou plusieurs hydrocarbures non saturés oligomères ou polymères ayant des poids moléculaires d'au moins 500, de préférence de 1000 à 10.000, et des indices d'iode d'au moins 60, de préférence de 150 à 600.

4. Utilisation d'un agent de séparation aqueux selon les revendications 1 à 3, caractérisée en ce que les hydrocarbures non saturés sont des oligomères ou des polymères d'isoprène et/ou de butadiène qui peuvent être, le cas échéant, encore copolymérisés ou polymérisés en blocs avec d'autres monomères polymérisables.

5. Utilisation d'un agent de séparation aqueux selon les revendications 1 à 4, caractérisée en ce que l'agent de séparation aqueux renferme les hydrocarbures non saturés en quantité allant de 0,5 à 50 % en poids, en particulier en quantité allant de 1 à 30 % en poids, rapporté au poids total de l'agent de séparation.

6. Utilisation d'un agent de séparation aqueux selon les revendications 1 à 5, caractérisée en ce que l'agent de séparation aqueux renferme en combinaison avec les substances actives de séparation, des agents stabilisants de la mousse appropriés pour des systèmes de polyuréthanne, de préférence les renferme en quantités allant de 0,2 à 6 % en poids, de préférence de 0,5 à 3 % en poids, rapporté au poids total d'agent de séparation.

7. Utilisation d'un agent de séparation aqueux selon les revendications 1 à 6, caractérisée en ce que l'agent de séparation aqueux renferme en tant que substance active de séparation au moins en partie une huile de silicone usuelle dans ce but, de préférence une polydimethylsilicone substituée éventuellement avec des restes hydrocarbonés aliphatiques et/ou aromatiques.

8. Utilisation d'un agent de séparation aqueux selon les revendications 1 à 7, caractérisée en ce que l'agent de séparation aqueux renferme en tant que substance active de séparation, au moins en partie des corps gras et/ou des huiles usuelles dans ce but.

9. Utilisation d'un agent de séparation aqueux selon les revendications 1 à 8, caractérisée en ce que l'agent de séparation aqueux renferme en tant que substance active de séparation au moins en partie une cire naturelle ou synthétique liquide ou solide, usuelle dans ce but.

10. Utilisation d'un agent de séparation aqueux selon les revendications 1 à 9, caractérisée en ce que l'agent de séparation aqueux renferme en tant que substance active de séparation au moins en partie un ester d'acide carboxylique naturel et/ou synthétique avec des alcools à une ou plusieurs valences.
